# EUROPÄISCHE PATENTSCHRIFT

(11) **EP 2 540 422 B1**
(45) Veröffentlichungstag und Bekanntmachung des Hinweises auf die Patenterteilung: **09.03.2016**
(21) Anmeldenummer: 12002792.5
(22) Anmeldetag: 20.04.2012
(51) Int. Cl.: B23B 29/24

(54) **Revolverscheibe mit Werkzeughaltern für Werkzeugmaschinen**
Turret disc with tool holders for machine tools
Disque de tourelle avec supports d'outils pour machines-outils

(30) Priorität: 30.06.2011 DE 202011103305 U
(43) Veröffentlichungstag der Anmeldung: 02.01.2013
(73) Patentinhaber: heimatec GmbH Präzisionswerkzeuge, 77871 Renchen (DE)
(72) Erfinder: Fiedler, Harald, Dipl.-Ing., 77652 Offenburg (DE)
(74) Vertreter: Maucher Börjes Jenkins Patent- und Rechtsanwälte

(56) Entgegenhaltungen:
- JP-A- 3 202 209
- JP-U- H0 256 507
- JP-U- H0 627 003
- US-A- 5 341 551

## Beschreibung

Die Erfindung betrifft eine Revolverscheibe mit Werkzeughaltern für Werkzeuge gemäß dem Oberbegriff des Anspruchs 1, für zur spanenden Bearbeitung von Werkstücken dienende Werkzeugmaschinen, wobei die Werkzeughalter zumindest an einer Stirnseite der Revolverscheibe einander benachbart angeordnet sind. Eine solche Revolverscheibe ist aus der JPH0256507U bekannt.

Derartige Revolverscheiben zur Aufnahme von gleichzeitig mehreren Werkzeughaltern insbesondere unterschiedlicher Art und Form sind bekannt, um unterschiedliche Bearbeitungen auf ein und derselben Werkzeugmaschine durchführen zu können. Dabei können einerseits Werkzeughalter für gekühlte Werkzeuge oder auch solche für ungekühlte Werkzeuge einander benachbart vorgesehen sein. Da die gekühlten Werkzeuge und demgemäß ihre Werkzeughalter einen größeren Platzbedarf haben, ist eine Anbringung von diesen gekühlten Werkzeugträgern oder Werkzeughaltern an ein und derselben Revolverscheibe nur in begrenztem Umfang möglich. Generell ist die Anzahl von Werkzeughaltern insbesondere an der Stirnseite einer Revolverscheibe durch deren Abmessungen erheblich eingeschränkt.

Zwar können Revolverscheiben unterschiedlicher Größen vorgesehen sein, jedoch findet eine derartige Maßnahme an der Abmessung der Werkzeugmaschine selbst ihre Grenzen.

Es besteht deshalb die Aufgabe, eine Revolverscheibe mit Werkzeughaltern der eingangs definierten Art zu schaffen, bei welcher eine größere Anzahl von Werkzeughaltern und/oder mehr Werkzeughalter insbesondere für gekühlte Werkzeuge untergebracht werden können.

Diese Aufgabe wird mit den Merkmalen und Maßnahmen des Patentanspruchs 1 gelöst.

Vorteilhafte und zweckmäßige Ausgestaltungen finden sich in den abhängigen Ansprüchen.

Insbesondere ist die eingangs definierte Revolverscheibe zur Lösung der Aufgabe dadurch gekennzeichnet, dass wenigstens ein Werkzeughalter eine gegenüber seiner Befestigungsstelle an der Revolverscheibe mit Abstand zu deren Stirnseite in Umfangsrichtung der Revolverscheibe vergrößerte Abmessung hat und wenigstens einen benachbarten Werkzeughalter teilweise überragt oder überlappt.

Auf diese Weise wird also ein Werkzeughalter mit relativ großer Abmessung dadurch an der Revolverscheibe untergebracht, dass sein Befestigungsbereich gegenüber dem eigentlichen Werkzeug-Haltebereich verkleinert ist. Der gegenüber der Befestigungsstelle vergrößerte Teil des Werkzeughalters ragt in Umfangsrichtung über wenigstens einen benachbarten Werkzeughalter und ist somit trotz dieser Größe, die im Befestigungsbereich mit dem benachbarten Werkzeughalter kollidieren würde, an der Revolverscheibe untergebracht.

Somit kann der begrenzte stirnseitige Platz der Revolverscheibe dadurch ausgenutzt werden, dass wenigstens ein Werkzeughalter mit Abstand zu dieser Stirnseite eine gewünschte Größe hat, die er unmittelbar an der Befestigungsstelle der Stirnseite wegen des oder der benachbarten anderen Werkzeughalter dort nicht haben kann. An einem benachbarten Werkzeughalter mit Abstand zu ihm und seiner Befestigungsstelle vorhandene Freiräume können also zur Anbringung eines Werkzeughalters genutzt werden, der zu groß für die Befestigungsstelle unmittelbar an der Stirnseite der Werkzeugscheibe ist.

Besonders zweckmäßig ist es dabei, wenn der gegenüber seiner Befestigungsstelle - mit Abstand zu der Stirnseite der Revolverscheibe - eine vergrößerte Abmessung aufweisende Werkzeughalter wenigstens einen benachbarten Werkzeughalter - insbesondere in Umfangsrichtung der Stirnseite der Revolverscheibe - derart überragt oder überlappt, dass ein an diesem benachbarten Werkzeughalter befindliches Werkzeug zugänglich ist.

Somit kann auch dieser unmittelbar benachbarte Werkzeughalter mit einem Werkzeug bestückt sein, welches jederzeit für eine spanende Bearbeitung zur Verfügung steht und eingesetzt werden kann, indem die Revolverscheibe entsprechend verdreht wird.

Die bessere Platzausnutzung an der Stirnseite der Revolverscheibe durch eine Überlappung wenigstens eines Werkzeughalters gegenüber einem benachbarten Werkzeughalter beeinträchtigt somit nicht die Benutzung der benachbarten Werkzeuge, sodass auch bei einem relativ begrenzten Platz an der Stirnseite der Revolverscheibe eine große Anzahl von Werkzeugen bereitgehalten werden kann.

Eine zweckmäßige Ausgestaltung der Erfindung kann dabei darin bestehen, dass der Werkzeughalter mit der gegenüber seiner Befestigungsstelle vergrößerten Abmessung im Bereich dieser vergrößerten Abmessung in seinem Inneren wenigstens ein Lager für das von ihm gehaltene Werkzeug enthält, welches vorzugsweise größer als ein der Revolverscheibe näheres Lager ist. Ein entsprechend großes und wirkungsvolles Werkzeug kann von diesem "überlappendem" Werkzeughalter aufgenommen werden.

Dabei ist es möglich, dass der einen benachbarten Werkzeughalter überlappende Werkzeughalter eine Kühlung oder Kanäle für ein Kühlmittel aufweist, sodass er ein entsprechend leistungsfähiges Werkzeug aufnehmen kann.

Der von einem Werkzeughalter mit bereichsweise - mit Abstand zur Stirnseite der Revolverscheibe - vergrößerter Abmessung überlappte Werkzeughalter kann zur Aufnahme eines feststehenden Werkzeugs oder eines Drehstahls vorgesehen oder ausgebildet oder ein Werkzeughalter für ein angetriebenes Werkzeug kleinerer Abmessung sein.

Auch ein solcher Werkzeughalter hat im Bereich der Stirnseite der Revolverscheibe eine sich in Umfangsrichtung erstreckende Abmessung, die zum Teil für die Befestigung dieses Werkzeughalters benötigt wird. Somit kann der überlappende Werkzeughalter diesen Befestigungsbereich überlappen, ohne die Funktion des feststehenden Werkzeugs oder des Drehstahls oder des kleineren angetriebenen Werkzeugs zu beeinträchtigen. Es kann also die Befestigung dieses Werkzeughalters für ein feststehendes oder kleineres Werkzeug platzmäßig für den überlappenden Werkzeughalter mit seiner vergrößerten und entsprechend leistungsfähigen Lagerung ausgenutzt werden.

Eine verbesserte Platzausnutzung ergibt sich, wenn wenigstens ein Werkzeughalter für ein feststehendes oder kleineres angetriebenes Werkzeug beidseits jeweils von einem Werkzeughalter mit zumindest seitlich vergrößerter Abmessung überlappt ist.

Erstrecht wird die Platzausnutzung an der Stirnseite der Revolverscheibe durch möglichst viele Werkzeuge verbessert, wenn zumindest an der Stirnseite mehrere der dort einander benachbarten oder kranzförmig angeordneten Werkzeughalter mit Abstand zu ihrer Befestigungsstelle eine zu wenigstens einem der benachbarten Werkzeughalter hin vergrößerte Abmessung haben und einen oder zwei benachbarte Werkzeughalter für feststehende oder angetriebene kleinere Werkzeuge bereichsweise unter Freilassung der Werkzeuge dieser benachbarten Werkzeughalter überlappen, sodass diese feststehenden Werkzeuge trotz der erwähnten Überlappung zugänglich sind und bleiben und ohne besondere Umbauten jederzeit einsatzfähig sind.

Eine weitere Ausgestaltung der Erfindung kann darin bestehen, dass zumindest an der Stirnseite einander benachbart abwechselnd Werkzeughalter für insbesondere feststehende Werkzeuge und diese überlappende Werkzeughalter für angetriebene und/oder gekühlte Werkzeuge angeordnet sind. Da Werkzeughalter für feststehende Werkzeuge in der Regel beidseits der eigentlichen Aufnahme für das feststehende Werkzeug Befestigungsstellen haben, können diese beidseitigen Befestigungsstellen jeweils - mit Abstand zur Stirnseite der Revolverscheibe - von Werkzeughaltern seitlich überlappt werden und dennoch für ihre Benutzung zugänglich bleiben.

Dennoch kann gleichzeitig eine relativ große Anzahl von Werkzeughaltern für angetriebene und/oder gekühlte Werkzeuge untergebracht werden, die jeweils mit ihrem gegenüber der Stirnseite der Revolverscheibe beabstandeten Bereich größerer Abmessung die Befestigungsstellen der benachbarten Werkzeughalter überragen oder überlappen und somit diesen eigentlich ungenutzten Raum ausnutzen.

Es ist bekannt, dass es unterschiedlich gestaltete Werkzeughalter oder Werkzeugträger für angetriebene Werkzeuge gibt. Bei der erfindungsgemäßen Revolverscheibe ist es möglich, dass wenigstens ein mit Abstand zur Stirnseite der Revolverscheibe in seiner Abmessung vergrößerter und einen benachbarten Werkzeughalter überlappendender Werkzeughalter ein angetriebenes Werkzeug aufweist, welches koaxial zur Drehachse der Revolverscheibe oder winklig zu der Drehachse der Revolverscheibe zu dieser radial nach außen weisend angeordnet ist. Es können also unterschiedlich gestaltete angetriebene Werkzeughalter vorgesehen sein, die in ihrem einen festen Werkzeughalter überlappenden Bereich koaxial oder winklig ausgebildet sind.

Dabei ist es möglich, dass wenigstens ein axial an der Revolverscheibe vorstehender Werkzeughalter mit im Abstand zur Revolver- oder Werkzeugscheibe vergrößerter Abmessung in seinem Befestigungsbereich in welchem er mit der Revolverscheibe verbunden ist, einen zu seiner Befestigung dienenden Befestigungssockel aufweist, dessen Querschnitt geringer als der des vergrößerten Bereichs ist und dass dieser Befestigungssockel einen Umriss und insbesondere in Umfangsrichtung der Revolverscheibe eine Abmessung hat, die in die Lücke zwischen zwei zu ihm beidseits benachbarten Werkzeughaltern passt und/oder der Abmessung dieser Lücke entspricht. Dies stellt eine konstruktiv zweckmäßige Ausgestaltung der Erfindung dar, um zu ermöglichen, dass ein Werkzeughalter mit einer relativ großen Lagerung für das Werkzeug und einer einen feststehenden benachbarten Werkzeughalter überlappenden Abmessung mit seinem Befestigungssockel zwischen zwei Werkzeughalter für feststehende Werkzeuge passt.

Der Befestigungssockel eines überlappenden Werkzeughalters kann etwa dreieck- oder trapezförmig ausgebildet sein und sein dem Umfang der Revolverscheibe näherliegender, insbesondere gekrümmter oder geradliniger Rand kann eine größere Abmessung als der radial dazu beabstandete innere Rand dieses Befestigungssockels haben und die Verbindungen der etwa in Richtung des Umfangs der Revolverscheibe verlaufenden Ränder des Sockels können etwa radial - geradlinig oder gegebenenfalls auch gekrümmt - angeordnet sein.

Eine weitere Ausgestaltung kann vorsehen, dass der dem überlappenden Werkzeughalter benachbarte Werkzeughalter im Bereich des Befestigungssockels des überlappenden Werkzeughalters eine dem Sockel teilweise aufnehmende Aussparung hat. Dadurch kann erreicht werden, dass der Befestigungssockel eine genügend große Befestigungsfläche hat, die zum Teil zu Lasten des benachbarten Werkzeughalters gehen kann, der aber dennoch trotz einer solchen Aussparung seinerseits genügend sicher befestigt werden kann.

Es sei noch erwähnt, dass wenigstens ein Werkzeughalter oder Werkzeugträger mit das Werkzeug aufnehmendem Schwenkkopf oder schwenkbarem Winkelkopf oder drehbarem Winkelkopf oder bezüglich seines Winkels einstellbarem Kopf vorgesehen sein kann. Auch ein derartiger Werkzeughalter kann bei der erfindungsgemäßen Revolverscheibe vorgesehen sein, weil sein Kopf an dem einen feststehenden Nachbar-Werkzeughalter überlappenden Bereich angeordnet ist.

Vor allem bei Kombination einzelner oder mehrerer der vorgeschriebenen Merkmale und Maßnahmen ergibt sich eine Revolverscheibe für feststehende Werkzeuge und für angetriebene und/oder gekühlte Werkzeuge, die den stirnseitigen Platz der Revolverscheibe dadurch bestmöglich ausnutzen, dass insbesondere die Werkzeughalter für angetriebene und/oder gekühlte Werkzeuge mit Abstand zur Stirnseite der Revolverscheibe gegenüber ihrer Befestigungsstelle derart in Umfangsrichtung ausladend gestaltet sind, dass sie die feststehenden Werkzeughalter derart überlappen, dass deren Werkzeuge für ihren Einsatz zugänglich sind und bleiben, also ohne besondere Umspannungen oder dergleichen sofort einsatzbereit sind.

Nachstehend sind Ausführungsbeispiele der Erfindung anhand der Zeichnung näher beschrieben. Es zeigt in zum Teil schematisierter Darstellung:
- Fig. 1 bis Fig. 10:: Darstellungen zum Stand der Technik,
- Fig. 11 bis Fig. 39:: Darstellungen zu erfindungsgemäßen Beispielen.

Es zeigt im einzelnen:

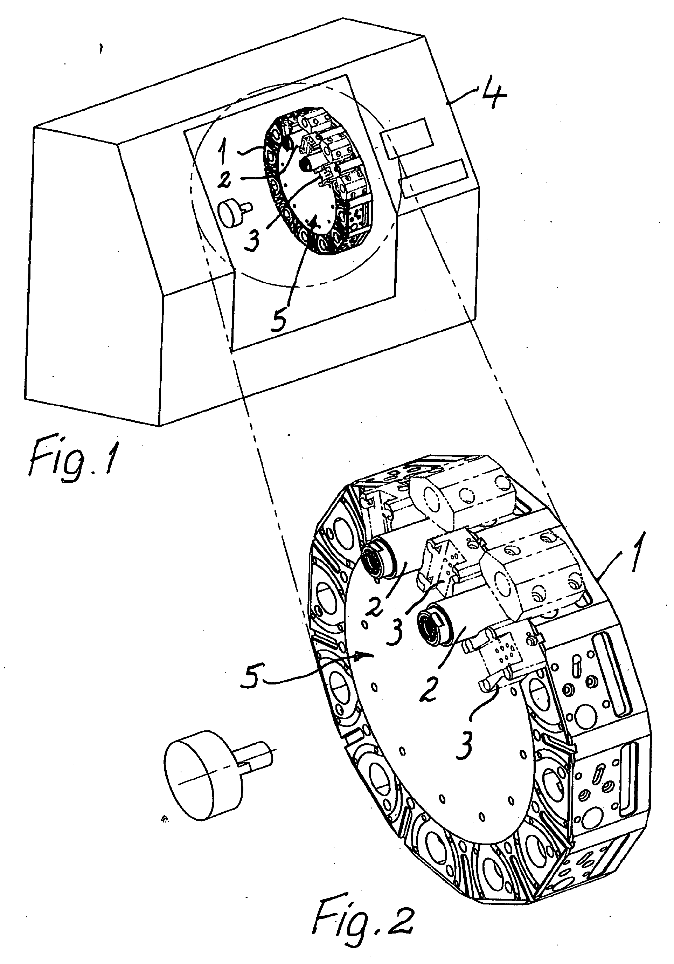

- Fig. 1:: in schaubildlicher und stark schematisierter Darstellung eine Drehmaschine bekannter Bauart mit einer Revolverscheibe, auf welcher Werkzeuge sowohl stirnseitig als auch umfangsseitig angeordnet sind,
- Fig. 2:: in vergrößertem Maßstab die Revolverscheibe gemäß Fig. 1 mit mit durchgehenden Linien gezeichneten angetriebenen Werkzeughaltern für axial angeordnete Werkzeuge, die stirnseitig an der Revolverscheibe befestigt sind und zur Berücksichtigung benachbarter Werkzeughalter eine begrenzte Abmessung haben,

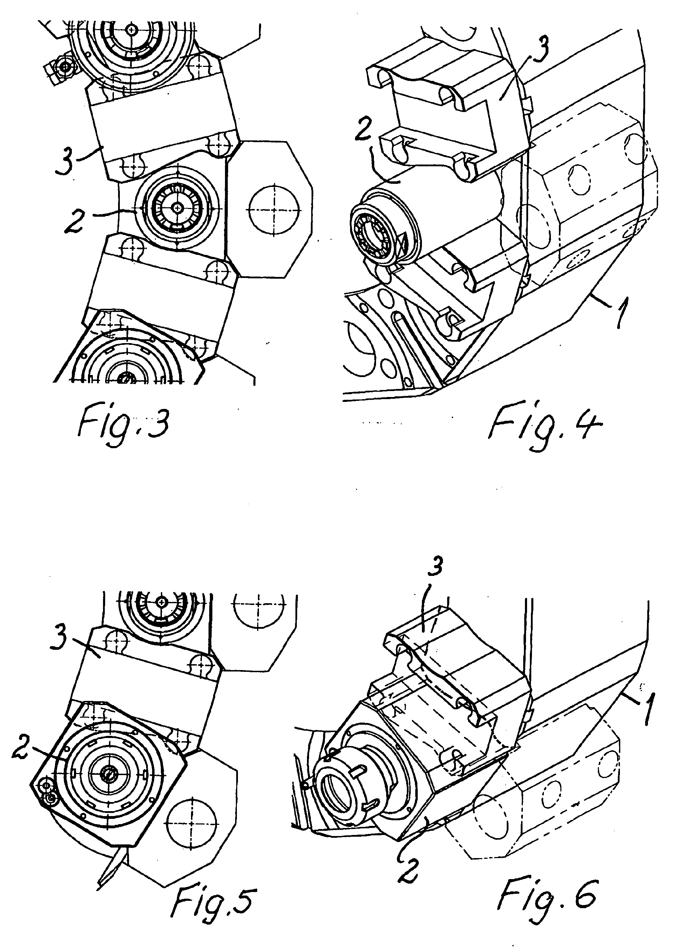

- Fig. 3:: in vergrößertem Maßstab die Draufsicht auf einen stirnseitigen Sektor der Revolverscheibe mit einem angetriebenen Werkzeughalter, der durch die benachbarten Werkzeughalter in seiner Abmessung eingeschränkt ist,
- Fig. 4:: eine schaubildliche Darstellung der Anordnung gemäß Fig. 3,
- Fig. 5:: eine stirnseitige Ansicht eines marktüblichen angetriebenen Axialkopfes als Werkzeughalter an der Stirnseite der Werkzeugscheibe gemäß den Fig. 1 bis 4, wobei erkennbar ist, dass es aufgrund der Größe dieses marktüblichen Werkzeughalters eine Kollision mit einem benachbarten Werkzeughalter geben würde beziehungsweise dieser benachbarte Werkzeughalter nicht eingesetzt oder nicht genutzt werden könnte,
- Fig. 6:: eine schaubildliche Darstellung der Anordnung gemäß Fig. 5,

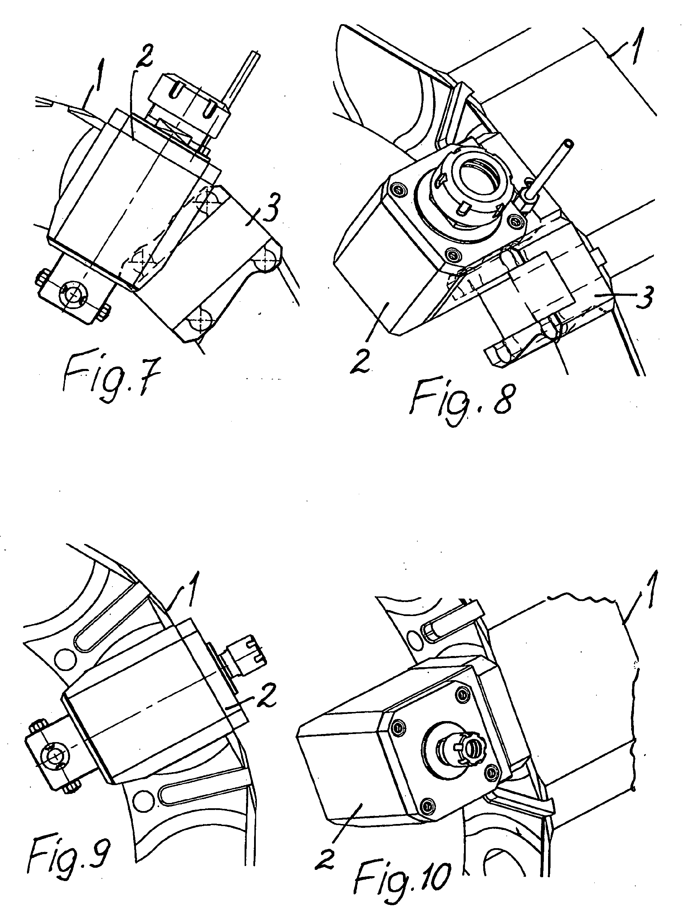

- Fig. 7:: eine der Fig. 5 entsprechende Darstellung, wobei als Werkzeughalter ein marktüblicher angetriebener Winkelkopf an der Revolverscheibe angeordnet und in die genormte Werkzeugaufnahme eingesetzt gezeichnet und dabei erkennbar ist, dass es eine Kollision mit den Nachbarwerkzeugen gäbe,
- Fig. 8:: eine schaubildliche Darstellung der Anordnung gemäß Fig. 7,
- Fig. 9:: eine den Darstellungen gemäß Fig. 5 und 7 entsprechende Ansicht eines Ausschnittes der Revolverscheibe mit Blick auf deren Stirnseite und auf einen marktüblichen angetriebenen Winkelkopf als Werkzeughalter, der durch seine große Abmessung verhindert, dass seine Nachbarplätze genutzt werden könnten, da die Kontur dieses Winkelkopfes weit in den Nachbarplatz hineinragt,
- Fig. 10:: eine schaubildliche Darstellung der Anordnung gemäß Fig. 9,

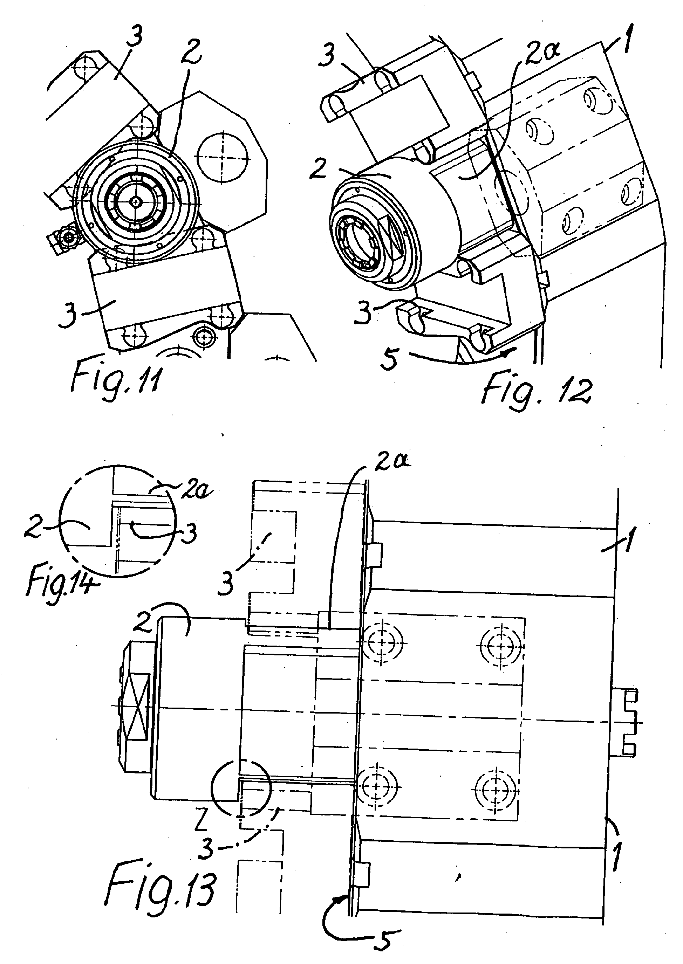

- Fig. 11:: eine Ansicht eines Ausschnittes der Revolverscheibe mit einer Stirnansicht eines daran angeordneten angetriebenen erfindungsgemäß gestalteten Axialkopfes als Werkzeughalter, wobei ein Bereich größerer Abmessung dieses Werkzeughalters gemäß der Erfindung die Werkzeughalter auf den benachbarten Plätzen soweit überlappt, dass der überlappende Bereich Platz für große Lager und ein entsprechend großes Werkzeug bietet, die an den benachbarten Werkzeughaltern anbringbaren Werkzeuge aber zugänglich und benutzbar bleiben,
- Fig. 12:: eine schaubildliche Darstellung der Anordnung gemäß Fig. 11,
- Fig. 13:: in vergrößertem Maßstab eine Seitenansicht des Werkzeughalters mit mit Abstand zur Revolverscheibe vergrößerter Abmessung und Überlappung der benachbarten Werkzeughalter bei gleichzeitigem Blick auf den Umfang der Revolverscheibe,
- Fig. 14:: in vergrößertem Maßstab die in Fig. 13 mit dem Kreis Z markierte Einzelheit, nämlich den Überlappungsbereich, wo der in seiner Abmessung vergrößerte Bereich des Werkzeughalters für ein angetriebenes Werkzeug den benachbarten Werkzeughalter für ein feststehendes oder kleineres Werkzeug überlappt oder übergreift oder überragt,

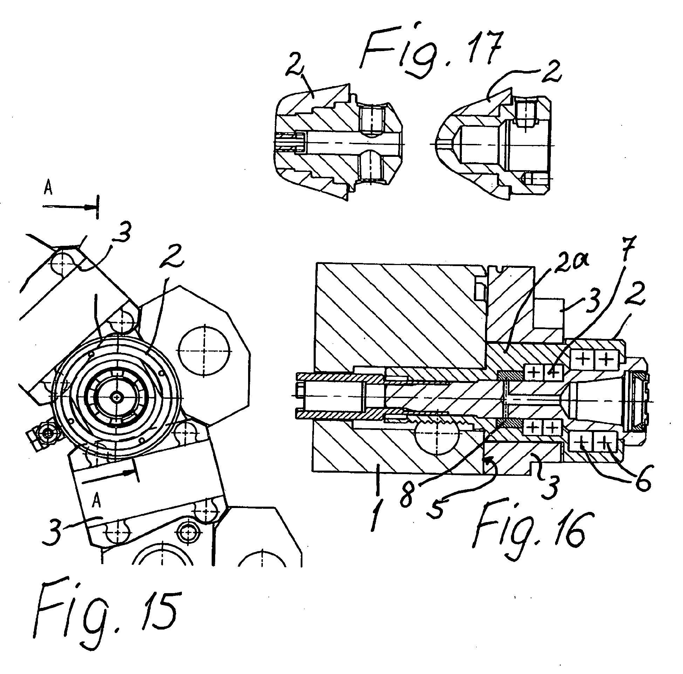

- Fig. 15:: eine der Fig. 11 entsprechende Darstellung mit Markierung der Schnittlinie A-A,
- Fig. 16:: einen Längsschnitt eines Werkzeughalters für ein angetriebenes Werkzeug mit einem mit Abstand zur Werkzeugscheibe in seiner Abmessung vergrößerten Bereich für vergrößerte Lager und mit in dem der Werkzeugscheibe näheren Bereich kleineren Lager für das angetriebene Werkzeug, wobei der in seiner Abmessung vergrößerte Bereich die benachbarten Werkzeughalter derart überragt oder überlappt, dass die dort anzubringenden Werkzeuge zugänglich und benutzbar sind,
- Fig. 17:: zwei verschiedene gegenüber Fig. 16 abgewandelte Werkzeugaufnahmen des in Fig. 16 mit einer Spannzange dargestellten Werkzeughalters,

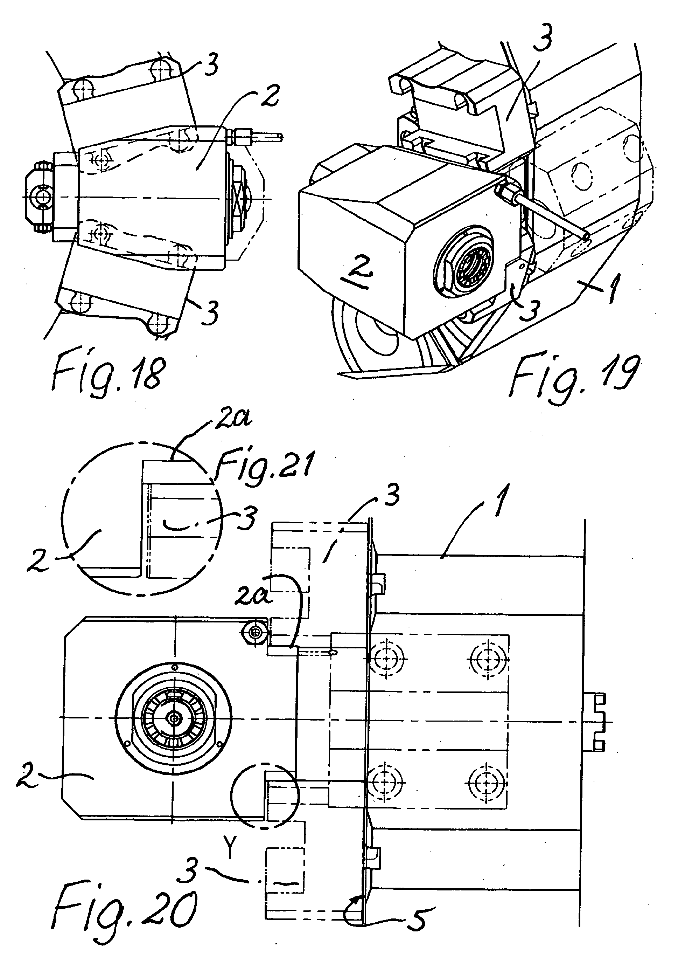

- Fig. 18:: eine etwa der Fig. 11 entsprechende Darstellung einer erfindungsgemäßen Anordnung, wobei als Werkzeughalter ein Winkelkopf vorgesehen ist, der mit Abstand zur Stirnseite der Revolverscheibe eine derart vergrößerte seitliche Abmessung aufweist, dass die benachbarten Werkzeughalter derart überlappt werden, dass die dort anzubringenden Werkzeuge zugänglich sind,
- Fig. 19:: eine schaubildliche Darstellung der Anordnung gemäß Fig. 18,
- Fig. 20:: eine Seitenansicht des als Winkelkopf ausgebildeten Werkzeughalters für ein angetriebenes Werkzeug mit Blick in Richtung des radial nach außen vorstehenden, nicht dargestellten Werkzeugs und mit Ansicht des Umfangs der Revolverscheibe,
- Fig. 21:: in vergrößertem Maßstab den Überlappungsbereich zwischen dem als Winkelkopf ausgebildeten Werkzeughalter und einem benachbarten Werkzeughalter für ein festes Werkzeug gemäß der in dem Kreis Y in Fig. 20 markierten Einzelheit,

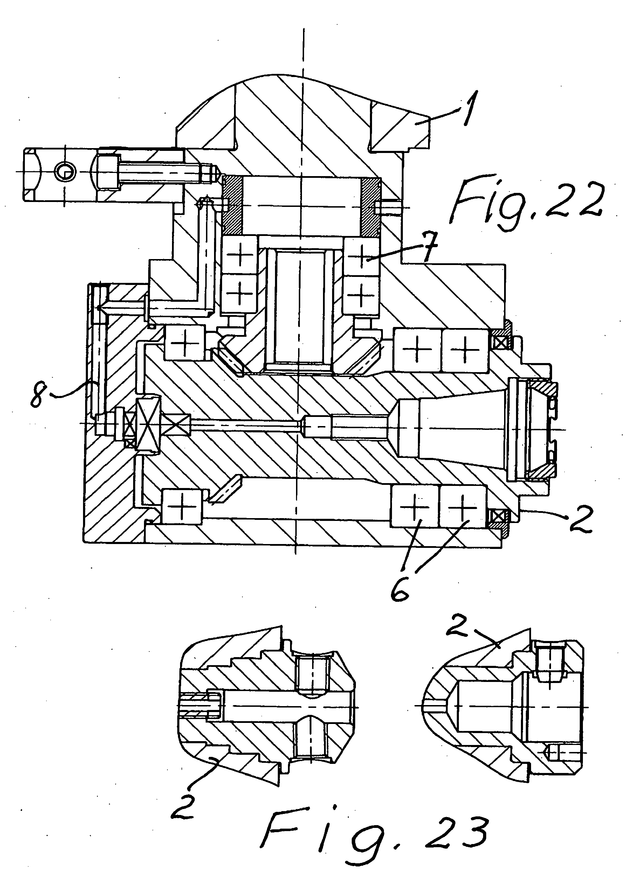

- Fig. 22:: einen Längsschnitt eines Werkzeughalters für ein angetriebenes Werkzeug in Form eines Winkelkopfes mit einer Spannzangenaufnahme und mit Kanälen zur Zuführung eines Kühlmittels für eine innere Kühlung,
- Fig. 23:: zwei verschiedene abgewandelte Werkzeugaufnahmen als Ersatz der Spanzangenaufnahme in Fig. 22,

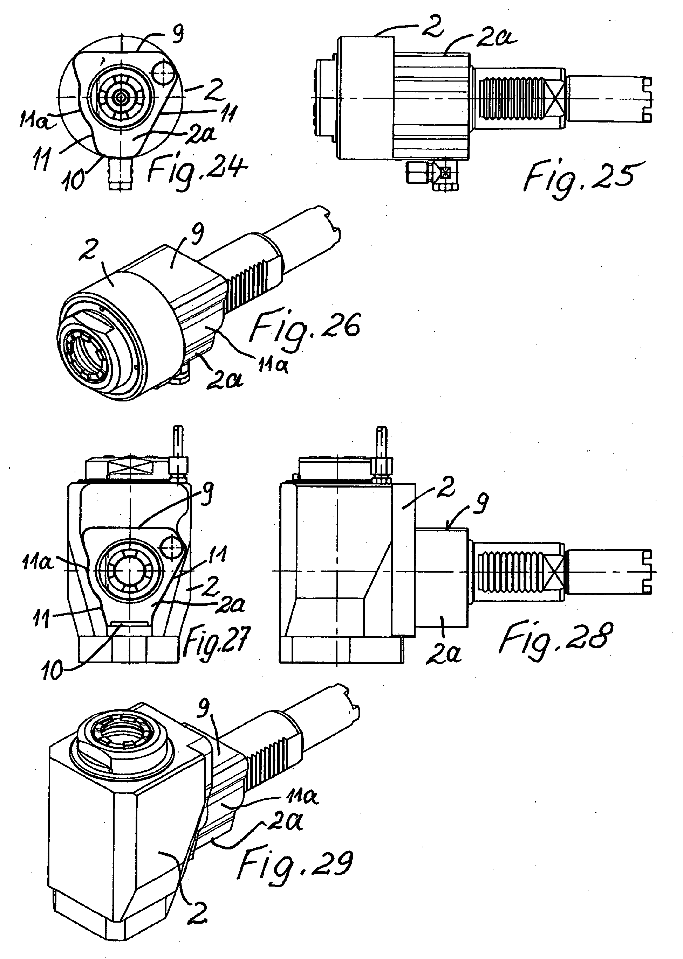

- Fig. 24:: eine Stirnansicht der Unterseite eines als Axialkopf ausgebildeten Werkzeughalters mit Blick auf dessen Antrieb und den Befestigungssockel sowie den darüber befindlichen, den Nachbar-Werkzeughalter überlappenden Bereich größerer Abmessung,
- Fig. 25:: eine Seitenansicht des Werkzeughalters gemäß Fig. 24,
- Fig. 26:: eine schaubildliche Darstellung des Werkzeughalters gemäß Fig. 24 und 25 mit seinem mit Abstand zu der Revolverscheibe vergrößerten Bereich zur Aufnahme entsprechend großer Lager für große Werkzeuge,
- Fig. 27:: eine der Fig. 24 entsprechende Ansicht eines als Winkelkopf ausgebildeten Werkzeughalters,
- Fig. 28:: eine Seitenansicht und
- Fig. 29:: eine schaubildliche Darstellung des als Werkzeughalter dienenden Winkelkopfes gemäß Fig. 27,

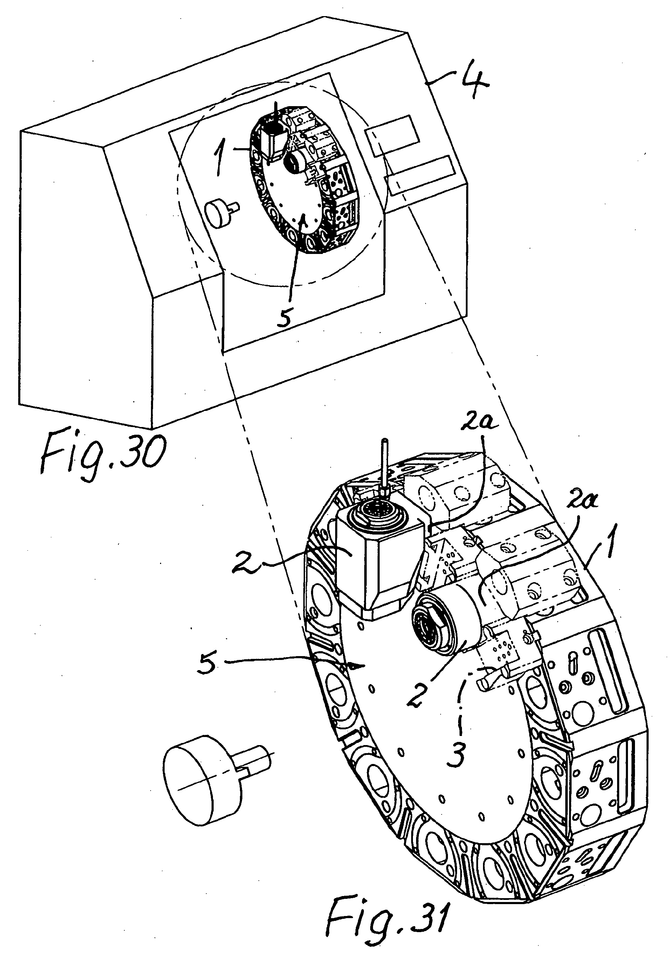

- Fig. 30:: eine Drehmaschine bekannter Bauart mit einer Revolverscheibe, an welcher erfindungsgemäß Werkzeughalter mit bezüglich ihrer Abmessung vergrößerten Bereichen stirnseitig angeordnet sind, die mit ihren vergrößerten Bereichen zwischen ihnen und benachbart zu ihnen befindliche Werkzeughalter für feste Werkzeuge derart überlappen und übergreifen, dass deren Werkzeuge zugänglich und ohne Umspannungen oder dergleichen frei benutzbar sind,
- Fig. 31:: in vergrößertem Maßstab die Revolverscheibe gemäß Fig. 30, wobei ein Winkelkopf und ein Axialkopf als Werkzeughalter für angetriebene Werkzeuge zwischen sich einen Werkzeughalter für ein festes Werkzeug derart überlappen, dass dieses ebenfalls frei bleibt und benutzbar ist, wobei weitere freie Befestigungsplätze an der Revolverscheibe mit weiteren derartigen angetriebenen Werkzeugen oder solchen gemäß den Fig. 11 bis 29 bestückt werden können,

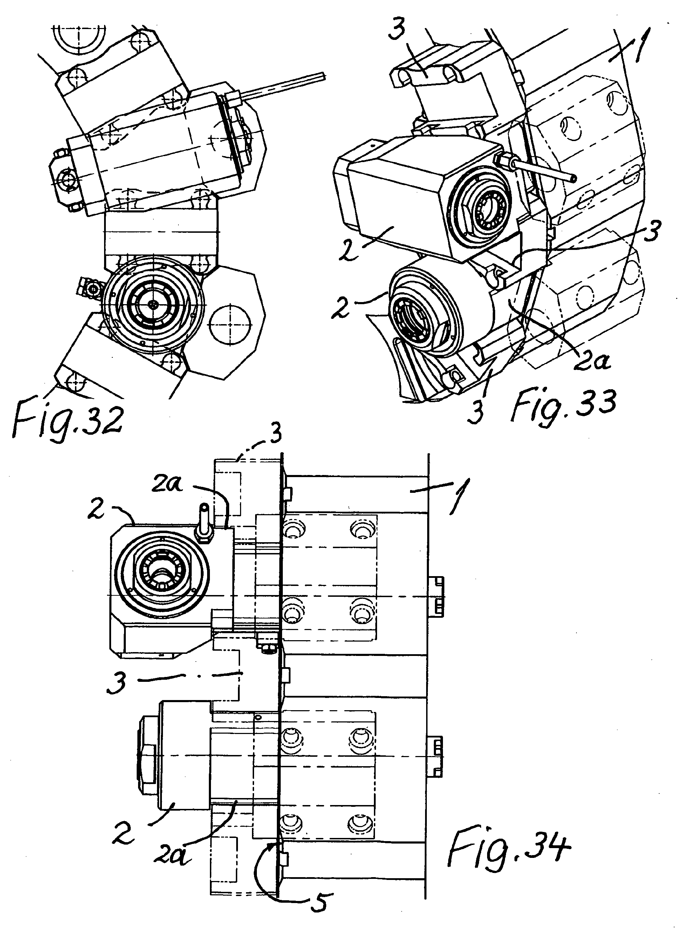

- Fig. 32:: eine Draufsicht in Richtung der Stirnseite eines Ausschnittes der Revolverscheibe mit den beiden in Fig. 31 in schaubildlicher Darstellung erkennbaren unterschiedlichen angetriebenen Werkzeughaltern und einem zwischen ihnen befindlichen, von ihnen überlappten weiteren Werkzeughalter,
- Fig. 33:: eine schaubildliche Darstellung der Anordnung gemäß Fig. 32,
- Fig. 34:: eine Ansicht der beiden Werkzeughalter gemäß den Fig. 30 bis 33 mit Blickrichtung auf den Umfang der Revolver- oder Werkzeugscheibe,

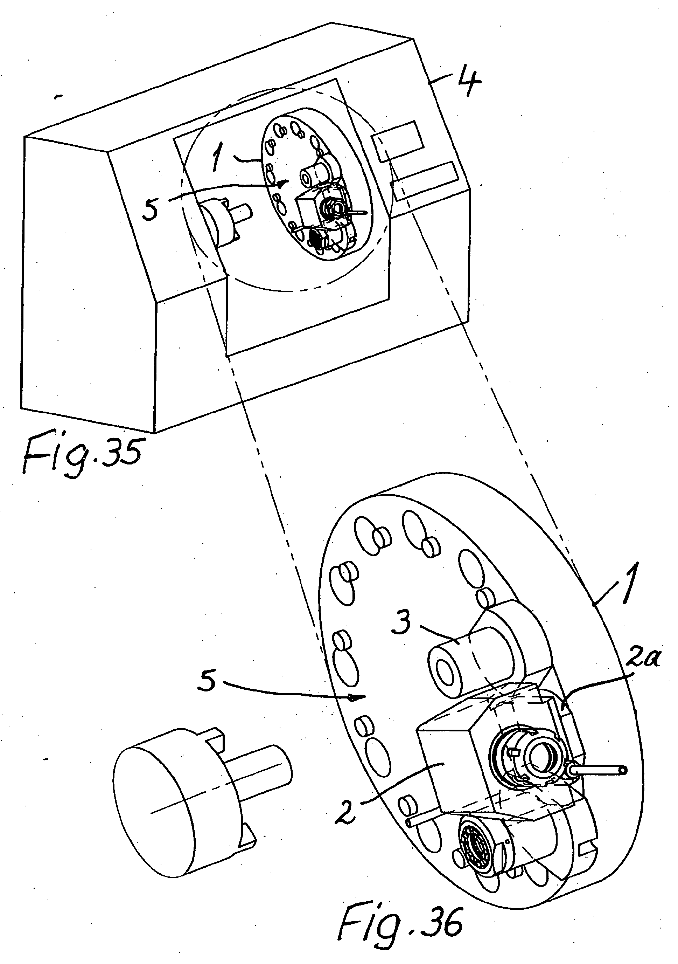

- Fig. 35:: in schematisierter schaubildlicher Darstellung eine Drehmaschine bekannter Bauart mit einer Revolverscheibe, an welcher - wie bei den Revolverscheiben gemäß allen zuvor erwähnten Fig. 1 bis 31 - auch am Umfang Werkzeuge angebracht werden könnten oder können, wobei an der Stirnseite der Revolverscheibe ein als Werkzeughalter für ein angetriebenes Werkzeug dienender Winkelkopf mit vergrößerter Abmessung die Halterungen benachbarter Werkzeughalter für angetriebene Werkzeuge geringerer Abmessung überlappt,
- Fig. 36:: in vergrößertem Maßstab die Revolverscheibe gemäß Fig. 35,

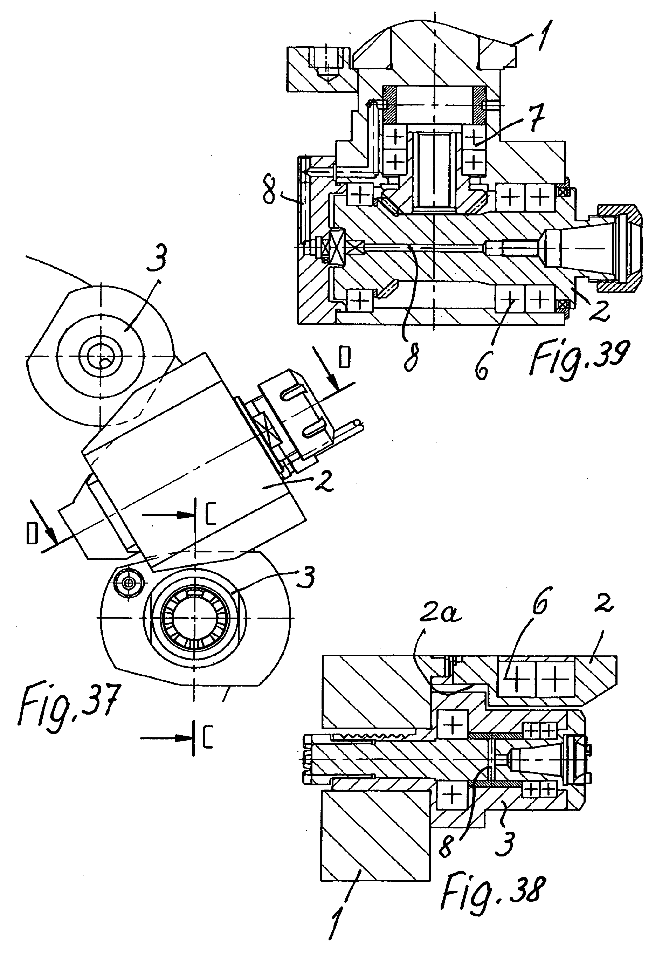

- Fig. 37:: eine Draufsicht der drei Werkzeughalter, die in Fig. 36 an der Revolverscheibe gezeichnet sind, wobei der mittlere, als Winkelkopf ausgebildete Werkzeughalter eine mit Abstand zur Revolverscheibe derart vergrößerte Abmessung hat, dass er Bereiche der benachbarten Werkzeughalter für angetriebene Werkzeuge mit geringerer Abmessung derart überlappt, dass die Werkzeuge zugänglich und frei sind,
- Fig. 38:: einen Schnitt durch einen Werkzeughalter für ein angetriebenes Werkzeug kleinerer Abmessung gemäß der Schnittlinie C-C in Fig. 37, wobei der unmittelbar an der Revolverscheibe anbringbare Haltebereich eine größere Lagerung als der entfernte Bereich enthält und dieser größere Bereich von dem Bereich vergrößerter Abmessung des mittleren Werkzeughalters erfindungsgemäß überlappt oder übergriffen ist, sowie
- Fig. 39:: einen Längsschnitt des Winkelkopfes gemäß der Schnittlinie D-D in Fig. 37 mit der Werkzeugaufnahme und der inneren Kühlung.

Bei der nachfolgenden Beschreibung unterschiedlicher Ausführungsbeispiele erhalten hinsichtlich ihrer Funktion übereinstimmende Teile auch bei abgewandelter Ausführungsform zumindest teilweise übereinstimmende Bezugszahlen.

Eine im ganzen mit 1 bezeichnete Revolverscheibe oder Werkzeugscheibe dient dazu, mehrere Werkzeughalter 2 und 3, seien es angetriebene Werkzeughalter 2 unterschiedlicher Form, seien es Werkzeughalter 3 für feststehende Werkzeuge oder angetriebene Werkzeuge geringerer Abmessung, für eine spanende Bearbeitung von Werkstücken an einer Werkzeugmaschine 4 derart zu fixieren, dass wahlweise die verschiedenen Werkzeuge der unterschiedenen Werkzeuge der unterschiedlichen Werkzeughalter durch Verdrehen der Revolverscheibe 1 zum Einsatz kommen können.

Die Werkzeughalter 2 und 3 sind dabei zumindest an einer Stirnseite 5 der Revolverscheibe 1 einander benachbart angeordnet, jedoch können auch am Umfang der Werkzeugscheibe 1 gemäß den strichpunktierten Darstellungen beispielsweise in Fig. 2, 4, 6, 12, 19, 31 oder 33 Werkzeughalter in der Regel für feste Werkzeuge vorgesehen sein.

Vor allem der an der Stirnseite 5 der Revolverscheibe 1 nahe dem äußeren Rand dieser Revolverscheibe 1 vorhandene Platz für solche Werkzeughalter 2 und 3 ist begrenzt und erlaubt bisher gemäß aus der Praxis bekannten Anordnungen nebeneinander nur die Anordnung von relativ kleinen Werkzeughaltern 2, das heißt marktübliche angetriebene Werkzeughalter 3 finden gemäß Fig. 2 bis 10 nicht genügend Platz ohne benachbarte Werkzeughalter zu verhindern oder gar nicht erst zuzulassen, wie es in den Fig. 5 bis 10 angedeutet ist.

Angetriebene Werkzeughalter 2 müssen also zwischen die festen Werkzeughalter 3 eingepasst und demgemäß mit ihrer Abmessung eingeschränkt werden, wie es in den Fig. 1 bis 4 für Axialköpfe 2 dargestellt ist. Diese Axialköpfe 2 müssen bei üblichen Revolverscheiben 1 gegenüber marktüblichen derartigen Axialköpfen relativ kleine Lager haben und können somit nur relativ kleine Werkzeuge aufnehmen und entsprechend geringe Kräfte übertragen.

Die Ausführungsformen gemäß den Fig. 11 bis 39 zeigen demgegenüber jeweils eine Revolverscheibe 1 mit Werkzeughaltern 2 und/oder 3, die an der Stirnseite 5 der Revolverscheibe 1 einander benachbart angeordnet sind, wobei wenigstens ein oder alle Werkzeughalter 2 eine gegenüber ihrer Befestigungsstelle und einem Befestigungssockel 2a an der Revolverscheibe 1 mit Abstand zu deren Stirnseite 5 in Umfangsrichtung der Revolverscheibe 1 eine vergrößerte Abmessung haben, die den Befestigungssockel 2a seitlich überragt, und wenigstens einen oder in den Ausführungsbeispielen mehrere benachbarte Werkzeughalter 3 damit teilweise überragt oder überlappt, sodass die Werkzeuge in diesen benachbarten Werkzeughaltern 3 zugänglich und frei sind.

Dabei sei an dieser Stelle bereits erwähnt, dass die überlappten Werkzeughalter 3 nicht nur gemäß den Fig. 11 bis 34 solche für feststehende Werkzeuge sein müssen, sondern gemäß Fig. 37 bis 39 auch solche Werkzeughalter 3 überlappt werden können, die mit entsprechend kleineren angetriebenen Werkzeugen versehen sind.

Auf diese Weise ist es gegenüber den aus der Praxis bekannten Lösungen gemäß den Fig. 1 bis 10 möglich, Werkzeughalter 2 für angetriebene Werkzeuge vorzusehen, die hinsichtlich der Lagerung und demgemäß auch der Kraftübertragung dieser marktüblichen Werkzeuge entsprechen, also ihre übliche Größe haben können, ohne dass aber zu ihnen benachbarte Plätze unbesetzt oder ungenutzt bleiben müssen.

Dadurch dass der Werkzeughalter 2 gegenüber seiner Befestigungsstelle und seinem Befestigungssockel 2a eine vergrößerte Abmessung hat, kann er in diesem Bereich vergrößerte Abmessung in seinem Inneren wenigstens ein oder bevorzugt zwei Lager 6 für das angetriebene Werkzeug enthalten, die größer als ein oder zwei der Revolverscheibe 1 näheren Lager 7 sind, was gut anhand der Fig. 16, 22 und 39 erkennbar ist. Entsprechend gut und fest ist das angetriebene Werkzeug gelagert und entsprechend große Kräfte können aufgenommen und übertragen werden, insbesondere Kräfte, die größer sind als die, die mit einem angetriebenen Werkzeughalter 2 gemäß Fig. 1 bis 4 übertragen werden könnten.

Der vergrößerte Bereich der Werkzeughalter 2 erlaubt also größere Lager und damit die Übertragung größerer Kräfte, ohne dass die Revolverscheibe 1 vergrößert werden müsste, weil dieser vergrößerte Bereich gegenüber einem nicht vergrößertem Sockel 2a soweit übersteht, dass benachbarte Werkzeughalter 3 von diesem vergrößerten Bereich übergriffen oder überlappt werden können, ohne aber die an solchen Werkzeughaltern 3 anzubringenden Werkzeuge zu beeinträchtigen oder gar unmöglich zu machen. Vielmehr können trotzdem diese Werkzeuge an den überlappten Werkzeughaltern 3 aufgrund des entsprechend gewählten Grades der Überlappung zugänglich sein und entsprechend benutzt werden. Der Grad der Überlappung ist dabei so gewählt, dass an dem festen oder auch angetriebenen benachbarten überlappten Werkzeughalter 3 die eigentliche Werkzeugaufnahme zugänglich und frei bleibt.

Aufgrund der Vergrößerung der Abmessung in dem überlappendem Bereichen kann der einen benachbarten Werkzeughalter 3 überlappende Werkzeughalter 2 auch in seinem Inneren eine Kühlung und/oder Kanäle 8 für ein Kühlmittel aufweisen, wie es beispielsweise in den Fig. 16, 22, 38 und 39 angedeutet oder dargestellt ist.

In den Ausführungsbeispielen gem. Fig. 11 bis 34 ist der von einem Werkzeughalter 2 mit bereichsweise vergrößerter Abmessung überlappte Werkzeughalter 3 zur Aufnahme eines feststehenden Werkzeugs oder eines Drehstahls vorgesehen oder ausgebildet.

Im Ausführungsbeispiel gemäß den Fig. 36 bis 39 ist hingegen der überlappte Werkzeughalter 3 zur Aufnahme eines angetriebenen Werkzeugs mit entsprechend verminderter Abmessung ausgebildet.

Dabei erkennt man in allen Ausführungsbeispielen, dass die Werkzeughalter 3 für ein feststehendes oder auch ein verkleinertes angetriebenes Werkzeug beidseits jeweils von einem Werkzeughalter 2 mit seitlich vergrößerter Abmessung überlappt werden können.

Wichtig ist in all diesen Fällen, dass die Abmessung, um welche der angetriebene Werkzeughalter 2 gegenüber der Stirnseite 5 der Revolverscheibe 1 vorsteht, größer als die Abmessung des Werkzeughalters 3 ist und die vergrößerte Abmessung sich im Überstand dieses Werkzeughalters 2 gegenüber dem Werkzeughalter 3 befindet, sodass dieser Überstand aufgrund seiner größeren seitlichen Abmessung die Überlappung bildet.

Wenn auch in den Fig. 2, 31 und 36 an der Stirnseite 2a der Revolverscheibe 1 nicht alle vorhandenen Plätze mit Werkzeughaltern 2 und 3 besetzt sind, ist aber dennoch vorgesehen, dass an der Stirnseite 5 mehrere und insbesondere alle Plätze mit Werkzeughaltern 2 und 3 besetzt sind und dabei mehrere der dort einander benachbarten oder kranzförmig angeordneten Werkzeughalter 2 mit Abstand zu ihrer Befestigungsstelle und zu der Stirnseite 5 der Revolverscheibe 1 eine zu wenigstens einem der benachbarten Werkzeughalter 3 hin vergrößerte Abmessung haben und einen oder zwei benachbarte Werkzeughalter 3 für feststehende oder verkleinerte angetriebene Werkzeuge bereichsweise unter Freilassung der Werkzeuge selbst übergreifen und überlappen und zwar in der Form, dass auch deren Werkzeuge zugänglich und arbeitsbereit sind.

Zumindest an der Stirnseite 5 der Revolverscheibe 1 können also einander benachbart abwechselnd Werkzeughalter 3 für feststehende - oder verkleinerte angetriebene - Werkzeuge und diese Werkzeughalter 3 überlappende Werkzeughalter 2 für angetriebene und/oder gekühlte Werkzeuge angeordnet sein, was zu einer bestmöglichen Platzausnutzung an der Stirnseite 5 der Revolverscheibe 1 führt, ohne diese vergrößern zu müssen und ohne auf Werkzeughalter 2 für marktübliche angetriebene Werkzeuge entsprechender Größe verzichten zu müssen.

Während im Ausführungsbeispiel gemäß den Fig. 11 bis 17 ein Werkzeughalter 2 für ein axial vorstehendes angetriebenes Werkzeug dargestellt ist, zeigen die Fig. 18 bis 23 einen sogenannten Winkelkopf, bei welchem das angetriebene Werkzeug winklig zum eigentlichen Antrieb und somit radial zur Drehachse der Revolverscheibe 1 nach außen verläuft und angeordnet ist.

Es kann also wenigstens ein mit Abstand zur Stirnseite 5 der Revolverscheibe 1 in seiner Abmessung vergrößerter und einen benachbarten Werkzeughalter 3 überlappender Werkzeughalter 2 ein angetriebenes Werkzeug aufweisen, welches koaxial zur Drehachse der Revolverscheibe 1 oder winklig zu der Drehachse der Revolverscheibe 1 und zu dieser radial nach außen weisend angeordnet ist.

Fig. 32 bis 34 zeigt nun ein Ausführungsbeispiel, bei welchem diese beiden Werkzeughalter 2 für angetriebene Werkzeuge kombiniert an der selben Revolverscheibe 1 vorgesehen sind, das heißt der Benutzer kann wahlweise die eine oder die andere Sorte solcher angetriebener Werkzeughalter 2 oder auch eine Kombination davon an ein und derselben Revolverscheibe 1 anbringen, weil die Abmessungen hinsichtlich der überlappenden Bereiche an die zu überlappenden benachbarten Werkzeughalter 3 entsprechend angepasst sind und miteinander übereinstimmen unabhängig davon, ob das angetriebene Werkzeug axial oder winklig angeordnet ist.

Damit die Werkzeughalter 2 mit ihrer bereichsweise vergrößerten und benachbarte Werkzeughalter 3 überlappenden Abmessung dennoch gut an der Revolverscheibe 1 befestigt werden können, haben diese axial an der Revolverscheibe 1 vorstehenden Werkzeughalter 2 mit dem Abstand zur Revolverscheibe 1 vergrößerter Abmessung in ihrem Befestigungsbereich, in welchem sie mit der Revolverscheibe 1 verbunden sind, einen besonders gut in den Fig. 24 bis 26 und in den Fig. 27 bis 29 erkennbaren Befestigungssockel 2a dessen Querschnitt bzw. dessen Außenabmessung geringer als der des vergrößerten Bereichs ist.

Dieser in allen erfindungsgemäßen Ausführungsbeispielen geeignete Befestigungssockel 2a hat in den genannten Fig. einen Umriss und insbesondere in Umfangsrichtung der Revolverscheibe eine Abmessung, die in die Lücke zwischen zwei zu ihm beidseits benachbarten Werkzeughaltern 3 passt und/oder der Abmessung dieser Lücke entspricht. Dies wird auch in den übrigen Fig. und beispielsweise in den Fig. 13, 16, 20 und 34 vor allem bei gemeinsamer Betrachtung erkennbar.

Gemäß den Fig. 24 und 27 ist dabei dieser Befestigungssockel 2a, der die kleineren Lager für das angetriebene Werkzeug enthält und zu einem überlappendem Werkzeughalter 2 gehört, etwa trapezförmig ausgebildet sein, könnte aber auch etwa die Form eines Dreiecks haben. Sein dem Umfang der Revolverscheibe 1 näherliegender, insbesondere gekrümmter oder gemäß den Fig. 24 und 27 geradliniger Rand 9 hat dabei eine größere Abmessung als der radial dazu beabstandete innere Rand 10 und die Verbindungen 11 der etwa in Richtung des Umfangs der Revolverscheibe 1 verlaufenden Ränder oder Verbindungen 11 des Sockels 2a sind etwa radial angeordnet. Dadurch entsprechen sie weitgehend den ihnen zugewandten Begrenzungen benachbarter Werkzeughalter 3 mit geringerer Ausdehnung gegenüber der Stirnseite 5 der Revolverscheibe 1, die oberhalb des Befestigungssockels 2a von dem Bereich größerer Abmessung überlappt und übergriffen werden. Dabei steht der Bereich größerer Abmessung gegenüber dem Sockel 2a rechtwinklig über, kann also einen Werkzeughalter 3 flächig übergreifen

Die Höhe des Befestigungssockels 2a gegenüber der Stirnseite 5 der Revolverscheibe 1 entspricht also mindestens der entsprechenden Höhe des überlappten Bereichs des benachbarten Werkzeughalters 3 oder übertrifft dessen Höhe geringfügig, wie man es besonders gut in den Fig. 13 und 14, 20 und 21, 34 und 38 - in Fig. 38 beim Üblappen eines Befestigungssockels 2a eines angetriebenen Werkzeughalters 3 geringerer Abmessung - erkennt.

In den Fig. 24 und 27 ist noch angedeutet, dass wenigstens einer der Verbindungsränder 11 eine Ausbauchung 11a haben kann, um gegebenenfalls eine innere Lagerung besser unterbringen zu können. In einem solchen Fall ist vorgesehen, dass der dem überlappendem Werkzeughalter 2 benachbarte Werkzeughalter 3 im Bereich des Befestigungssockels 2a und dabei im Bereich der Ausbauchung 11a des überlappenden Werkzeughalters 2 eine den Befestigungssockel 2a und seine Ausbauchung 11a aufnehmende Aussparung hat.

Während in den Ausführungsbeispielen Werkzeughalter 2 mit festen Köpfen für die Werkzeuge dargestellt sind, seien es Axialköpfe, seien es Winkelköpfe, können in gleicher Weise auch Werkzeughalter 2 mit das Werkzeug aufnehmenden Schwenkköpfen oder schwenkbaren Winkelköpfen oder drehbaren Winkelköpfen oder bezüglich des Winkels einstellbaren Köpfen vorgesehen sein.

Die Revolverscheibe 1 trägt an ihrer Stirnseite 5 und gegebenenfalls auch an ihrem Außenumfang Werkzeughalter 2 für angetriebene Werkzeuge und außerdem Werkzeughalter 3 für nicht angetriebene oder gegebenenfalls verkleinerte angetriebene Werkzeuge. Die Werkzeughalter 2 und die Werkzeughalter 3 sind an der Stirnseite 5 der Revolverscheibe 1 einander benachbart angeordnet und können an der Revolverscheibe 1 in einer Werkzeugmaschine 4 eingebaut werden.

Damit die Werkzeughalter 2 für angetriebene Werkzeuge möglichst große Lager enthalten können, um mit den angetriebenen Werkzeugen entsprechend große Kräfte übertragen zu können, ohne die Revolverscheibe 1 vergrößern oder die Zahl der stirnseitig angeordneten Werkzeughalter 2 und 3 vermindern zu müssen, hat wenigstens einen Werkzeughalter 2 oder haben gegebenenfalls mehrere oder alle stirnseitigen Werkzeughalter 2 eine gegenüber der Befestigungsstelle an der Revolverscheibe 1 mit Abstand zu deren Stirnseite 5 zumindest in Umfangsrichtung der Revolverscheibe 1 eine vergrößerte Abmessung, die wenigstens einen benachbarten Werkzeughalter 3 - für feststehende Werkzeuge oder für verkleinerte angetriebene Werkzeuge - derart überragt oder überlappt, dass das an einem solchen benachbarten Werkzeughalter 3 befindliche Werkzeug zugänglich ist und arbeitsfähig bleibt.

Die Werkzeughalter 2 überragen die Werkzeughalter 3 und übergreifen oder überlappen sie in ihrem überragenden Bereich, wo in seitlicher Richtung dafür Platz vorhanden ist, sodass sie entsprechend große Lager enthalten können. Die Revolverscheibe muss dennoch für eine derartigen Anordnung von Werkzeughaltern 2 und 3 nicht vergrößert werden.

## Patentansprüche

1. Revolverscheibe (1) mit Werkzeughaltern (2, 3) für Werkzeuge für zur spanenden Bearbeitung von Werkstücken dienende Werkzeugmaschinen (4), wobei die Werkzeughalter (2, 3) zumindest an einer Stirnseite (5) der Revolverscheibe (1) einander benachbart angeordnet sind, **dadurch gekennzeichnet, dass** wenigstens ein Werkzeughalter (2) eine gegenüber seiner Befestigungsstelle an der Revolverscheibe (1) mit Abstand zu deren Stirnseite (5) in Umfangsrichtung der Revolverscheibe (1) vergrößerte Abmessung hat und wenigstens einen benachbarten Werkzeughalter (3) teilweise überragt oder überlappt.

2. Revolverscheibe nach Anspruch 1, **dadurch gekennzeichnet, dass** der gegenüber seiner Befestigungsstelle eine vergrößerte Abmessung aufweisende Werkzeughalter (2) wenigstens einen benachbarten Werkzeughalter (3) derart überragt oder überlappt, dass ein an diesem benachbarten Werkzeughalter (3) befindliches Werkzeug zugänglich ist.

3. Revolverscheibe nach Anspruch 1 oder 2, **dadurch gekennzeichnet, dass** der Werkzeughalter (2) mit der gegenüber seiner Befestigungsstelle vergrößerten Abmessung im Bereich dieser vergrößerten Abmessung in seinem Inneren wenigstens ein Lager (6) für das Werkzeug enthält, das vorzugsweise größer als ein der Revolverscheibe (1) näheres Lager (7) ist.

4. Revolverscheibe nach einem der Ansprüche 1 bis 3, **dadurch gekennzeichnet, dass** der einen benachbarten Werkzeughalter (3) überlappende Werkzeughalter (2) eine Kühlung und/oder Kanäle (8) für ein Kühlmittel aufweist.

5. Revolverscheibe nach einem der Ansprüche 1 bis 4, **dadurch gekennzeichnet, dass** der von einem Werkzeughalter (2) mit bereichsweise vergrößerter Abmessung überlappte Werkzeughalter (3) zur Aufnahme eines feststehenden Werkzeugs oder eines Drehstahls vorgesehen oder ausgebildet oder ein Werkzeughalter für ein angetriebenes Werkzeug kleiner Abmessung ist,

6. Revolverscheibe nach einem der Ansprüche 1 bis 5, **dadurch gekennzeichnet, dass** wenigstens ein Werkzeughalter (3) für ein feststehendes oder kleineres angetriebenes Werkzeug beidseits jeweils von einem Werkzeughalter (2) mit seitlich vergrößerter Abmessung überlappt ist.

7. Revolverscheibe nach einem der Ansprüche 1 bis 6, **dadurch gekennzeichnet, dass** zumindest an der Stirnseite (5) mehrere der dort einander benachbarten oder kranzförmig angeordneten Werkzeughalter (2) mit Abstand zu ihrer Befestigungsstelle eine zu wenigstens einem der benachbarten Werkzeughalter (3) hin vergrößerte Abmessung haben und einen oder zwei benachbarte Werkzeughalter (3) insbesondere für feststehende oder angetriebene Werkzeuge bereichsweise unter Freilassung der Werkzeuge dieser benachbarten Werkzeughalter (3) überlappen.

8. Revolverscheibe nach einem der Ansprüche 1 bis 7, **dadurch gekennzeichnet, dass** zumindest an der Stirnseite (5) einander benachbart abwechselnd Werkzeughalter (3) für insbesondere feststehende Werkzeuge und diese überlappende Werkzeughalter (2) für angetriebene und/oder gekühlte Werkzeuge angeordnet sind.

9. Revolverscheibe nach einem der Ansprüche 1 bis 8, **dadurch gekennzeichnet, dass** wenigstens ein mit Abstand zur Stirnseite (5) der Revolverscheibe (1) in seiner Abmessung vergrößerter und einen benachbarten Werkzeughalter (3) überlappender Werkzeughalter (2) ein angetriebenes Werkzeug aufweist, welches koaxial zur Drehachse der Revolverscheibe (1) oder winklig zu der Drehachse der Revolverscheibe (1) zu dieser radial nach außen weisend angeordnet ist.

10. Revolverscheibe nach einem der Ansprüche 1 bis 9, **dadurch gekennzeichnet, dass** wenigstens ein axial an der Revolverscheibe (1) vorstehender Werkzeughalter (2) mit im Abstand zur Revolverscheibe (1) vergrößerter Abmessung in seinem Befestigungsbereich, in welchem er mit der Revolverscheibe (1) verbunden ist, einen Befestigungssockel (2a) aufweist, dessen Querschnitt geringer als der des vergrößerten Bereichs ist, und dass dieser Befestigungssockel (2a) einen Umriss und insbesondere in Umfangsrichtung der Revolverscheibe (1) eine Abmessung hat, die in die Lücke zwischen zwei zu ihm beidseits benachbarten Werkzeughalter (3) passt und/oder der Abmessung dieser Lücke entspricht.

11. Revolverscheibe nach einem der Ansprüche 1 bis 10, **dadurch gekennzeichnet, dass** der Befestigungssockel (2a) eines überlappenden Werkzeughalters (2) etwa dreieck- oder trapezförmig ausgebildet ist und sein dem Umfang der Revolverscheibe (1) näherliegender, insbesondere gekrümmter oder geradliniger Rand (9) eine größere Abmessung als der radial dazu beabstandete innere Rand (10) hat und dass die Verbindungen (11) der etwa in Richtung des Umfangs der Revolverscheibe (1) verlaufenden Ränder (11) des Befestigungssockels (2a) etwa radial angeordnet sind.

12. Revolverscheibe nach einem der Ansprüche 1 bis 11, **dadurch gekennzeichnet, dass** der dem überlappenden Werkzeughalter (2) benachbarte Werkzeughalter (3) im Bereich des Befestigungssockels (2a) des überlappenden Werkzeughalters (2) eine den Befestigungssockel (2a) teilweise aufnehmende Aussparung hat.

13. Revolverscheibe einem der Ansprüche 1 bis 12, **dadurch gekennzeichnet, dass** wenigstens ein Werkzeughalter (2) mit das Werkzeug aufnehmendem Schwenkkopf oder schwenkbarem Winkelkopf oder drehbarem Winkelkopf oder bezüglich seines Winkels einstellbarem Kopf vorgesehen ist.

## Claims

1. A turret disc (1) for tool holders (2, 3) for tools for machine tools (4) for machining workpieces, wherein the tool holders (2, 3) are disposed adjacent to one another at least on a front side (5) of the turret disc (1), **characterised in that** at least one tool holder (2) has a dimension which is increased, relative to its attachment point to the turret disc (1) at a distance from its front side (5), in the circumferential direction of the turret disc (1) and partially projects beyond or overlaps at least one adjacent tool holder (3).

2. The turret disc according to claim 1, **characterised in that** the tool holder (2) having a dimension which is increased relative to its attachment point projects beyond or overlaps at least one adjacent tool holder (3), in such a way that a tool located at this adjacent tool holder (3) is accessible.

3. The turret disc according to claim 1 or 2, **characterised in that** the tool holder (2) having a dimension which is increased relative to its attachment point comprises at least one bearing (6) in its interior in the region of this increased dimension, said bearing preferably being larger than a bearing (7) closer to the turret disc (1).

4. The turret disc according to any one of claims 1 to 3, **characterised in that** the tool holder (2) overlapping an adjacent tool holder (3) comprises a cooling element and/or channels (8) for a coolant.

5. The turret disc according to any one of claims 1 to 4, **characterised in that** the tool holder (3) overlapped by a tool holder (2) with a zonally increased dimension is provided or constituted for receiving a fixed tool or a turning tool or is a tool holder for a driven tool having smaller dimensions.

6. The turret disc according to any one of claims 1 to 5, **characterised in that** at least one tool holder (3) for a fixed or smaller driven tool is overlapped on both sides in each case by a tool holder (2) with a laterally increased dimension.

7. The turret disc according to any one of claims 1 to 6, **characterised in that**, at least that the front side (5), several of the tool holders (2) adjacent to one another there or disposed in a ring-shaped manner have, at a distance from their attachment point, a dimension increased towards at least one of the adjacent tool holders (3) and overlap one or two adjacent tool holders (3), in particular for fixed or driven tools, in zones thereby leaving free the tools of these adjacent tool holders (3).

8. The turret disc according to any one of claims 1 to 7, **characterised in that** there are disposed alternately adjacent to one another, at least at the front face (5), tool holders (3) particularly for fixed tools and, overlapping the latter, tool holders (2) for driven and/or cooled tools.

9. The turret disc according to any one of claims 1 to 8, **characterised in that** at least one tool holder (2), increased in its dimension at a distance from the front side (5) of the turret disc (1) and overlapping an adjacent tool holder (3), comprises a driven tool, which is disposed coaxial with the rotational axis of the turret disc (1) or at an angle to the rotational axis of the turret disc (1) pointing radially outwards with respect to the latter.

10. The turret disc according to any one of claims 1 to 9, **characterised in that** at least one tool holder (2) projecting axially on the turret disc (1) with a dimension increased at a distance from the turret disc (1) comprises, in its attachment region in which it is connected to the turret disc (1), a mounting socket (2a), the cross-section whereof is smaller than that of the enlarged region, and that this mounting socket (2a) has an outline and, particularly in the circumferential direction of the turret disc (1), a dimension which fits into the gap between tool holders (3) adjacent to it on both sides and/or corresponds to the dimension of this gap.

11. The turret disc according to any one of claims 1 to 10, **characterised in that** the mounting socket (2a) of an overlapping tool holder (2) is constituted approximately triangular or trapezoidal and its, in particular, curved or rectilinear edge (9) lying closer to the circumference of the turret disc (1) has a larger dimension than the inner edge (10) spaced radially apart therefrom and that the connections (11) of the edges (11) of the mounting socket (2a) running approximately in the direction of the circumference of the turret disc (1) are disposed approximately radially.

12. The turret disc according to any one of claims 1 to 11, **characterised in that** the tool holder (3) adjacent to the overlapping tool holder (2) comprises, in the region of the mounting socket (2a) of the overlapping tool holder (2), a recess partially accommodating the mounting socket (2a).

13. The turret disc according to any one of claims 1 to 12, **characterised in that** at least one tool holder (2) is provided with a swivelling head or a swivelling angle head or a rotatable angle head or a head adjustable in respect of its angle that accommodates the workpiece.

## Revendications

1. Disque de tourelle (1) avec des supports d'outil (2, 3) pour des outils, pour des machines-outils (4) servant à l'usinage de pièces à usiner par enlèvement de copeaux, les supports d'outil (2, 3) étant agencés de façon adjacente au moins sur un côté frontal (5) du disque de tourelle (1), **caractérisé en ce qu'**au moins un support d'outil (2) présente une dimension agrandie par rapport à son point de fixation sur le disque de tourelle (1), avec un espacement par rapport au côté frontal (5) de celui-ci dans le sens du pourtour du disque de tourelle (1), et fait partiellement saillie au-delà d'au moins un support d'outil (3) voisin ou chevauche celui-ci.

2. Disque de tourelle selon la revendication 1, **caractérisé en ce que** le support d'outil (2) présentant une dimension agrandie par rapport à son point de fixation fait saillie au-delà d'au moins un support d'outil (3) voisin ou chevauche celui-ci, de façon à ce qu'un outil situé sur ce support d'outil (3) voisin soit accessible.

3. Disque de tourelle selon la revendication 1 ou 2, **caractérisé en ce que** le support d'outil (2) présentant une dimension agrandie par rapport à son point de fixation comprend en son intérieur au moins un palier (6) pour l'outil, dans la région de cette dimension agrandie, lequel est de préférence plus grand qu'un palier (7) plus proche du disque de tourelle (1).

4. Disque de tourelle selon l'une des revendications 1 à 3, **caractérisé en ce que** le support d'outil (2) chevauchant un support d'outil (3) voisin présente un système de refroidissement et/ou des canaux (8) pour un réfrigérant.

5. Disque de tourelle selon l'une des revendications 1 à 4, **caractérisé en ce que** le support d'outil (3) chevauché par un support d'outil (2) présentant une dimension agrandie par endroits est prévu ou conçu pour recevoir un outil fixe ou un burin de tournage, ou est un support d'outil pour un outil entraîné de petite taille.

6. Disque de tourelle selon l'une des revendications 1 à 5, **caractérisé en ce qu'**au moins un support d'outil (3) pour un outil fixe ou un outil entraîné de petite taille est chevauché des deux côtés respectivement par un support d'outil (2) présentant une dimension agrandie latéralement.

7. Disque de tourelle selon l'une des revendications 1 à 6, **caractérisé en ce qu'**au moins sur le côté frontal (5), plusieurs des supports d'outil (2) adjacents les uns aux autres ou agencés en couronne présentent une dimension agrandie par rapport à au moins l'un des supports d'outil (3) voisins, avec un espacement par rapport à leur point de fixation, ou chevauchent un ou deux supports d'outil (3) voisins, en particulier pour des outils fixes ou entraînés, tout en dégageant par endroits les outils de ce support d'outil (3) voisin.

8. Disque de tourelle selon l'une des revendications 1 à 7, **caractérisé en ce qu'**au moins sur un côté frontal (5), des supports d'outil (3) destinés en particulier à des outils fixes sont agencés en alternance et de façon adjacente à des supports d'outil (2) chevauchant ceux-ci pour des outils entraînés et/ou refroidis.

9. Disque de tourelle selon l'une des revendications 1 à 8, **caractérisé en ce qu'**au moins un support d'outil (2) de plus grande taille et chevauchant un support d'outil (3) voisin, avec un espacement par rapport au côté frontal (5) du disque de tourelle (1) présente un outil entraîné, lequel est agencé coaxialement à l'axe de rotation du disque de tourelle (1) ou sous un angle par rapport à l'axe de rotation du disque de tourelle (1), tout en étant orienté radialement vers l'extérieur par rapport à celui-ci.

10. Disque de tourelle selon l'une des revendications 1 à 9, **caractérisé en ce qu'**au moins un support d'outil (2) faisant saillie axialement sur le disque de tourelle (1), avec un espacement par rapport au disque de tourelle (1) et de plus grande taille, présente, dans sa région de fixation dans laquelle il est relié au disque de tourelle (1), un socle de fixation (2a) dont la section transversale est inférieure à celle de la région agrandie, et **en ce que** ce socle de fixation (2a) présente un contour et en particulier une dimension dans le sens du pourtour du disque de tourelle (1) adapté(e) pour s'insérer dans un interstice entre deux supports d'outil (3) voisins disposés de chaque côté de celui-ci, et/ou correspond à la dimension de cet interstice.

11. Disque de tourelle selon l'une des revendications 1 à 10, **caractérisé en ce que** le socle de fixation (2a) d'un support d'outil (2) chevauchant est conçu de façon approximativement triangulaire ou trapézoïdale, et son bord (9) plus proche du pourtour du disque de tourelle (1), en particulier courbe ou rectiligne, présente une dimension supérieure par rapport au bord intérieur (10) espacé radialement de celui-ci, et **en ce que** les liaisons (11) des bords (11) du socle de fixation (2a) s'étendant approximativement dans le sens du pourtour du disque de tourelle (1) sont agencées approximativement radialement.

12. Disque de tourelle selon l'une des revendications 1 à 11, **caractérisé en ce que** le support d'outil (3) adjacent au support d'outil (2) chevauchant présente un évidement recevant partiellement le socle de fixation (2a), dans la région du socle de fixation (2a) du support d'outil (2) chevauchant.

13. Disque de tourelle selon l'une des revendications 1 à 12, **caractérisé en ce qu'**au moins un support d'outil (2) est pourvu d'une tête pivotante recevant l'outil, ou d'une tête angulaire pivotante, ou d'une tête angulaire rotative, ou d'une tête réglable quant à son angle.
